(19) Europäisches Patentamt
European Patent Office
Office européen des brevets

(11) **EP 2 227 025 B1**

(12) **EUROPEAN PATENT SPECIFICATION**

(45) Date of publication and mention
of the grant of the patent:
**14.11.2012 Bulletin 2012/46**

(51) Int Cl.:
***H04N 9/73*** (2006.01)

(21) Application number: **09180559.8**

(22) Date of filing: **23.12.2009**

(54) **Apparatus and method for adjusting white balance of digital image**

Vorrichtung und Verfahren zur Einstellung des Weißabgleichs eines digitalen Bilds

Appareil et procédé d'ajustement du niveau du blanc d'une image numérique

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **20.02.2009 KR 20090014438**

(43) Date of publication of application:
**08.09.2010 Bulletin 2010/36**

(73) Proprietors:
 • **Samsung Electronics Co., Ltd.
 Suwon-si, Gyeonggi-do, 443-742 (KR)**
 • **Inha-Industry Partnership Institute
 Incheon (KR)**

(72) Inventors:
 • **Kim, Ji-Hye
 Gyeonggi-do (KR)**
 • **Cho, Sung-Dae
 Gyeonggi-do (KR)**
 • **Park, Min-Kyu
 Gyeonggi-do (KR)**
 • **Park, Hee-Chan
 Gyeonggi-do (KR)**
 • **Kim, Jin-Ho
 Gyeonggi-do (KR)**
 • **Oh, Yun-Je
 Gyeonggi-do (KR)**
 • **Kim, Kyoung-Tae
 Incheon (KR)**
 • **Kim, Choon-Woo
 Incheon (KR)**
 • **Jang, Seul-Ki
 Incheon (KR)**

(74) Representative: **Grünecker, Kinkeldey,
Stockmair & Schwanhäusser
Leopoldstrasse 4
80802 München (DE)**

(56) References cited:
 EP-A2- 1 585 345      US-A1- 2007 133 071
 US-A1- 2010 013 952   US-A1- 2010 020 192

**Description**

**BACKGROUND OF THE INVENTION**

1. Field of the Invention

The present invention relates generally to an apparatus and a method for processing a digital image, and more particularly, to an apparatus and a method for adjusting white balance of a digital image.

2. Description of the Related Art

An image device may perform white balance adjustment on images that it reproduces or photographs. The white balance adjustment affects the color of the image so that it is equal or similar to a color that a user has perceived.

In US 2007/133071 A1 it is described an imaging system that generates a gain for a component of an image format. The gain is at least partially dependent on the brightness of the light source illuminating a scene when an image of the scene was generated. The gain can be used to correct the component of the image format for the color shift in the image caused by the light source.

In EP 1 585 345 A2 it is described a method of automatic white balance for an image capture system. The automatic white balance mechanism ascertains the illuminant source of an image by analyzing the number of white pixels within a predefined white area in a color space diagram. The automatic white balance mechanism also determines gain adjustments based on the evaluating the average RGB values to achieve white balance.

In US 2010/013952 A1 it is described an apparatus for controlling gain of color signal that includes an auto white balance algorithm applying unit determining a white estimation region from an input image, and calculating a first color signal gain for correcting an average color signal level of pixels of the white estimation region to white, a pixel determining unit determining a form of each pixel according to brightness and color using the color signal level of the each pixel of the input image, and a color signal gain determining unit determining a color signal gain to be applied to the each pixel according to the form of the each pixel of the input image as any one of the first color signal gain, a second color signal gain determined by the color signal level of the each pixel for correcting the each pixel to white and a unit gain.

In US 2010/020192 A1 it is described a method of controlling auto white balance that includes: converting a color space of an input image from an RGB color space into a YCbCr color space; dividing the input image into a plurality of divided regions; selecting a predetermined number of divided regions in order determined by mean values of Y of pixels included in the plurality of divided regions; comparing a predetermined threshold value with the number of pixels having values of Cb and Cr within a predetermined Cb-Cr range among the pixels included in the selected divided regions in order to determine a white area; ; and calculating auto white balance gains by using mean values of Y, mean values of Cb, and mean values of Cr of the pixels included in each of the selected divided regions when the number of pixels within the predetermined Cb-Cr range is greater than the threshold value.

A difference in color between the image and the user's perception can be caused by a light source illuminating a subject of the image or by an external background where the subject is photographed. Examples of the light source include, for example, sunlight, a fluorescent lamp, and incandescent lamp, etc. A user may not be aware of a variation in color despite a change in illumination or background, because the user adapts to these changes. However, since devices, such as digital cameras, are not capable of such an adaptation, a color perceived by the user may be different from a color of an image.

Through white balance adjustment, an image having a color that is different from that perceived by the user is adjusted such that the color of the adjusted image is equal or similar to that perceived by the user. White balance adjustment is based on a white region of the image, and restores the white color, which was changed by the light source or the surrounding background, to the white color the user perceived.

White balance adjustment may be performed by two different methods. A first method estimates a type of background illumination used while photographing a subject and adjusts the white balance according to the estimation. This method searches for a white region(s) of an image. A gain of each channel is adjusted based on an average of image information or RGB values corresponding thereto, or an average of color difference signals (R-Y) and (B-Y). A second method, which does not estimate the type of illumination, adjusts a gain of each channel based on an average for each channel of the entire image. A color composed of an average for each channel is assumed to be white when an input image has a sufficient color variation. Specifically, it is possible to achieve white balance of an image by adjusting gains of RGB values of an image so that an average for each channel becomes equal.

In the first method of adjusting white balance by estimating a type of background illumination, searching for a white region of an image should precede all other steps. Therefore, this method is only able to adjust white balance when an input image includes a white region. If the white region of the image is not detected, white balance adjustment performance deteriorates.

Additionally, since the first method does not consider a characteristic of a sensor while photographing a subject, its performance after white balance adjustment is not high. Further, since this method uses one transformation matrix, or lookup table, during color matching after white balance adjustment regardless of the light source, the color may be viewed differently according to the light source.

## SUMMARY OF THE INVENTION

The present invention has been made to address at least the above problems and/or disadvantages and to provide at least the advantages described below. Accordingly, an aspect of the present invention provides a white balance adjustment apparatus and method for minimizing color distortion caused by light sources in an image with a white color.

According to one aspect of the present invention, a method for adjusting white balance of a digital image is provided. An input image is converted into a YCbCr color space. White pixels of the converted input image are detected by determining whether each pixel of the converted input image is included in a preset region of the YCbCr color space. A gain of each channel is calculated from averages of R, G and B values of the detected white pixels. White balance adjustment is performed by applying the calculated gain of each channel to each pixel of the input image.

In this method detecting white pixels comprises: converting an image obtained by photographing gray patches of a Macbeth color checker for each light source into the YCbCr color space; modeling for each converted image a linear function graph representing a relation between chrominance $|Cb|+|Cr|$ and luminance Y; calculating two linear function graphs for each light source, wherein slopes of each of the two linear function graphs differ from a slope of the modeled linear function graph by a preset slope value; determining whether pixels of the input image are included in a region between the two linear function graphs calculated for each light source; and defining the pixels of the input image that are included in the region between the two linear function graphs calculated for each light source as white pixels.

It is also provided an apparatus for adjusting white balance of a digital image, comprising:

   an image converter for converting an input image into a YCbCr color space;
   a white detector for detecting white pixels by comparison chrominance and luminance of the converted input image with chrominance and luminance of image obtained by photographing predetermined gray patches;
   a gain calculator for calculating a gain of each R, G and B channel from averages of R, G and B values of the detected white pixels; and
   a white balance executer for performing white balance adjustment by applying the calculated gain of each R, G and B channel to each pixel of the input image; and wherein the white detector converts an image obtained by photographing gray patches of a Macbeth color checker for each light source into the YCbCr color space, models for each converted image a linear function graph representing a relation between chrominance $|Cb|+|Cr|$ and luminance Y, calculates two linear function graphs for each light source, wherein slopes of each of the two linear function graphs differ from a slope of the modeled linear function graph by a preset slope value, determines whether pixels of the input image are included in a region between the two linear function graphs calculated for each light source, and defines the pixels of the input image included in the region between the two linear function graphs calculated for each light source as white pixels.

## BRIEF DESCRIPTION OF THE DRAWINGS

The above and other aspects, features and advantages of the present invention will be more apparent from the following detailed description when taken in conjunction with the accompanying drawings, in which:

   FIG 1 is a block diagram of a white balance adjustment apparatus, according to an embodiment of the present invention;
   FIG 2 is a graph illustrating a relation between chrominance Cb and Cr of an image obtained by photographing gray patches of a Macbeth color checker for each light source, according to an embodiment of the present invention;
   FIG. 3 is a graph illustrating a relation between chrominance $|Cb|+|Cr|$ and luminance Y of an image obtained by photographing gray patches of a Macbeth color checker for each light source, according to an embodiment of the present invention;
   FIG. 4 is a linear function graph illustrating a relation between chrominance $|Cb|+|Cr|$ and luminance Y of an image obtained by photographing gray patches of a Macbeth color checker for each light source, according to an embodiment of the present invention;
   FIG. 5 is a graph illustrating a slope range where white pixels are detected in a linear function graph modeled for white detection of an image during white balance adjustment, according to an embodiment of the present invention;
   FIG. 6 is a diagram illustrating white detection results on each light source during white balance adjustment, according to an embodiment of the present invention;

FIG. 7 is a graph illustrating R, G and B gains of each light source, according to an embodiment of the present invention;

FIG. 8 is a diagram illustrating a process of making a color matching matrix applied during white balance adjustment, according to an embodiment of the present invention; and

FIG. 9 is a flowchart illustrating a white balance adjustment method, according to an embodiment of the present invention.

## DETAILED DESCRIPTION OF EMBODIMENTS OF THE PRESENT INVENTION

Embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

The embodiments of the present invention adjust white balance of a digital image to minimize color distortion that is caused by light sources and to improve image quality. The embodiments of the present invention convert an input image into a YCbCr color space. A linear function graph is modeled to indicate a relation between chrominance |Cb|+|Cr| and luminance Y of an image obtained by photographing 6 patches at the bottom of 24 patches of a Macbeth color checker for each light source. White pixels of the input image are detected using the modeled linear function graph. Further, embodiments of the present invention calculate R, G and B gains from R, G and B averages of the detected white pixels, adjust white balance using the calculated R, G and B gains, distinguish a light source based on a gain of a particular channel, and apply a color matching matrix corresponding to the distinguished light source. A white balance adjustment apparatus and method according to an embodiment of the present invention are described in detail with reference to accompanying drawings.

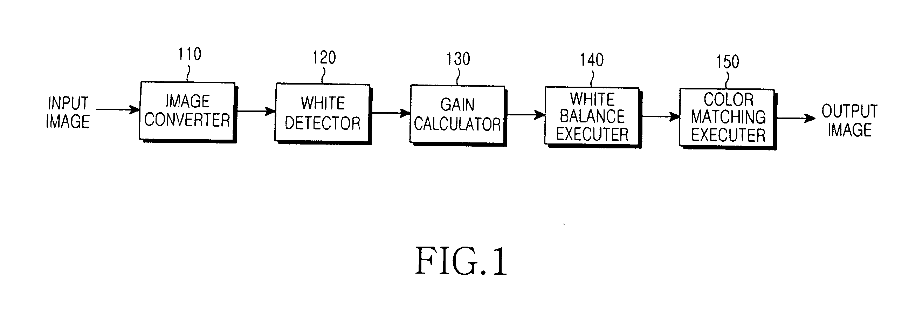

Referring initially to FIG. 1, a block diagram illustrates a white balance adjustment apparatus, according to an embodiment of the present invention. The apparatus includes an image converter 110, a white detector 120, a gain calculator 130, a white balance executer 140, and a color matching executer 150.

The image converter 110 converts an input image into a form of a YCbCr color space using Red (R), Green (G) and Blue (B) values of each pixel of the input image. Equation (1) is used for the RGB-to-YCbCr conversion.

$$Y = 0.2990 \times R + 0.5870 \times G + 0.1140 \times B$$
$$Cb = -0.1687 \times R - 0.3313 \times G + 0.5000 \times B$$
$$Cr = 0.5000 \times R - 0.4187 \times G - 0.0813 \times B \qquad \dots\dots\dots (1)$$

R, G and B represent R, G and B pixel values of a particular pixel, Y represents a luminance component, and Cb and Cr represent color difference components.

The white detector 120 detects white pixels based on image information that is converted into the YCbCr color space by the image converter 110.

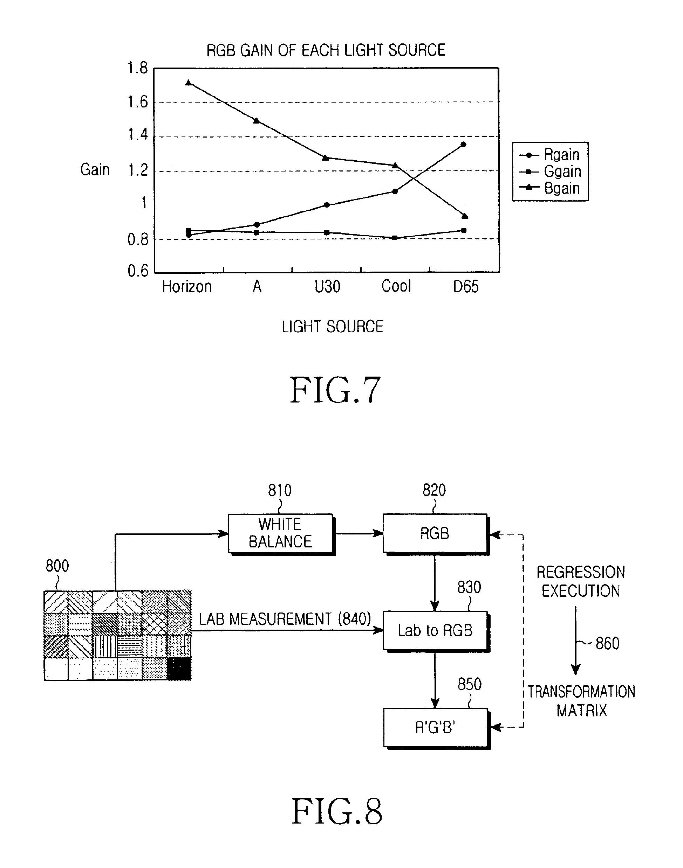

The white detector 120 models a linear function graph of chrominance |Cb|+|Cr| versus luminance Y for each of 6 gray patches at the bottom of 24 patches of a Macbeth color checker. The Macbeth color checker is a test chart that is shown by reference numeral 800 in FIG. 8 and is generally used to measure a chroma level of an image.

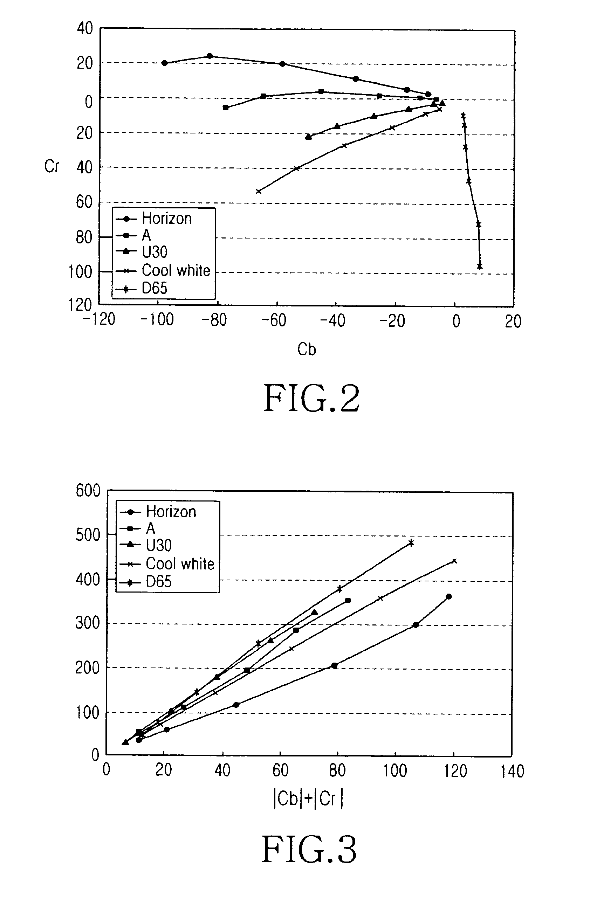

FIG. 2 is a graph illustrating a relation between chrominance Cb and Cr of an image obtained by photographing gray patches of a Macbeth color checker for each light source, according to an embodiment of the present invention. The 6 gray patches are photographed at each light source by a Complementary Metal-Oxide Semiconductor (CMOS) sensor, and converted into a YCbCr color space, and then shown on a CbCr plane for each of the light sources. In an embodiment of the present invention, five light sources are used, namely Horizon, A, U30, Cool white, and D65. Curves representing CbCr of the 6 gray patches for the five light sources are shown from the left top to the right bottom in order of Horizon, A, U30, Cool white, and D65.

The further a curve is from the gray axis (Cb=Cr=0), the greater the luminance. Thus, the luminance increases with |Cb|+|Cr|. FIG. 3 is a graph illustrating a relation between chrominance |Cb|+|Cr| and luminance Y of an image obtained by photographing gray patches of a Macbeth color checker for each light source, according to an embodiment of the present invention.

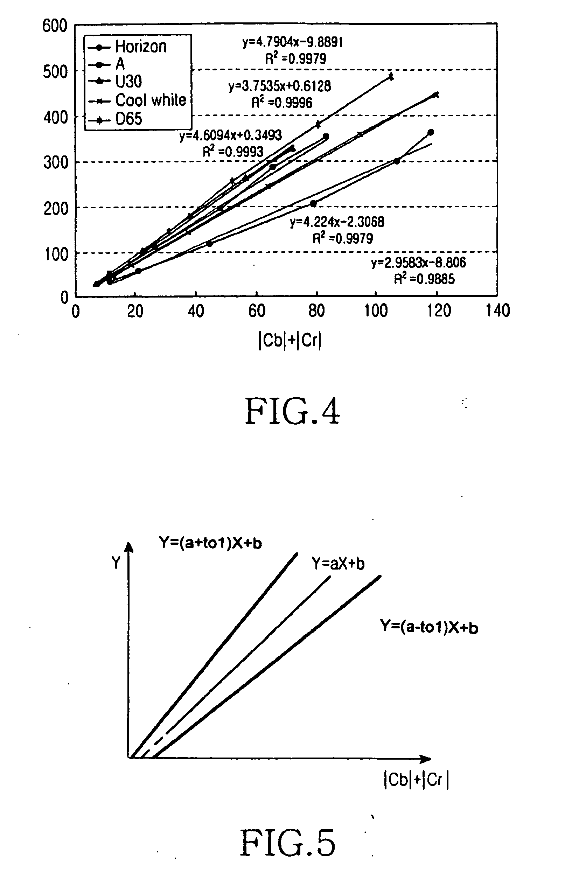

The graph of FIG. 3 can be modeled as a linear function graph, since chrominance |Cb|+|Cr| and luminance Y are proportional to each other. FIG. 4 is a linear function graph illustrating a relation between chrominance |Cb|+|Cr| and luminance Y of an image obtained by photographing gray patches of a Macbeth color checker for each light source, according to an embodiment of the present invention.

FIG. 5 is a graph illustrating a slope range where white pixels are detected in a linear function graph modeled for white detection of an image during white balance adjustment, according to an embodiment of the present invention. The white balance adjustment apparatus according to the present invention calculates two new linear function graphs having a slope determined by adding or subtracting a preset value to/from a slope of a linear function graph that is modeled for each light source. The apparatus then determines whether pixels of an input image are included in a region between the two new linear function graphs to determine whether they are white pixels. Specifically, the white balance adjustment apparatus models a Y-|Cb|+|Cr| relation of a particular light source in the form of Y=aX+b which is a linear function graph, and calculates, as shown in FIG. 5, two linear function graphs, the slopes of which are different by a preset slope value, tol, from the slope of the modeled linear function graph. If pixels of the input image are included in a region between the calculated two linear function graphs, they are determined to be white pixels.

The pixels are determined to be white pixels even when their luminance is greater than an average luminance of the input image by a preset multiple c. Such white detection is performed by Equation (2) and Equation (3).

$$(a\text{-}tol)(|Cb|+|Cr|)+b < Y < (a+tol)(|Cb|+|Cr|)+b \qquad \dots\dots\dots (2)$$

'a' represents a slope of a modeled linear function graph indicating a Y-|Cb|+|Cr| relation of a particular light source, 'b' represents a y-intercept, *tol* represents a preset slope range, and Y represents luminance of an input image.

$$c\overline{Y} < Y \qquad \dots\dots\dots (3)$$

$\overline{Y}$ represents an average luminance of an input image, and 'c' represents a preset constant that is multiplied by the average luminance.

Equation (2) is applied to both linear function graphs calculated for the five light sources. That is, pixels satisfying all of formulae derived from the five light sources are determined and detected as white pixels.

If R, G and B values of an input image are close to gray, i.e., if Cb and Cr of the input image are simultaneously close to zero (0), they are excluded during white detection. Thus, if absolute values of Cb and Cr of the input image are less than a preset threshold, they are excluded during white detection.

R, G and B gains that are to be used in automatic white balance adjustment are calculated with the detected white pixels. If gray pixels are included during the calculation, the image may be colored as a result of the automatic white balance. Therefore, when Equation (4) is satisfied in addition to Equation (2) or Equation (3), the pixels are determined to be white pixels.

$$Cb < \quad TH \quad or \ Cb > \quad TH$$
$$Cr < \quad TH \quad or \ Cr > \quad TH \dots\dots\dots (4)$$

*Th* represents a preset threshold that is a criterion for detecting gray.

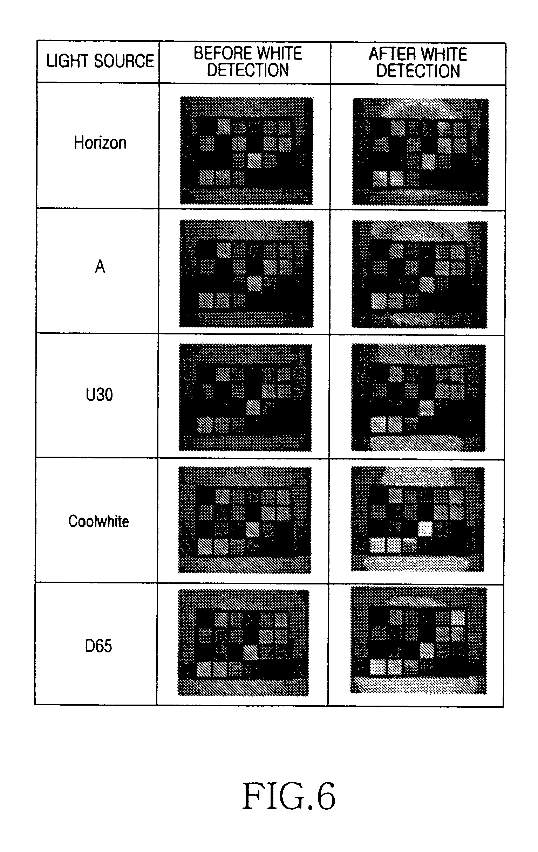

FIG. 6 is a diagram illustrating white detection results for each light source during white balance adjustment according to an embodiment of the present invention. Images before white detection and images after white detection are shown for a Macbeth color checker for each light source. In right-side images shown in FIG. 6, regions displayed in white represent regions where white pixels are detected.

Referring again to FIG. 1, the gain calculator 130 calculates R, G and B gains from R, G and B averages of the detected white pixels to perform white balance adjustment. Equation (5) is used for the gain calculation.

$$R_{gain} = \frac{(\overline{R} + \overline{G} + \overline{B})/3}{\overline{R}}$$

$$G_{gain} = \frac{(\overline{R} + \overline{G} + \overline{B})/3}{\overline{G}}$$

$$B_{gain} = \frac{(\overline{R} + \overline{G} + \overline{B})/3}{\overline{B}} \qquad \dots \dots \dots (5)$$

$\overline{R}$ represents an average of R values of white pixels detected by the white detector 120, $\overline{G}$ represents an average of G values of the white pixels, $\overline{B}$ represents an average of B values of the white pixels, $R_{gain}$ represents an R gain, $G_{gain}$ represents a G gain, and $B_{gain}$ represents a B gain.

The white balance executer 140 perform white balance adjustment using the R, G and B gains calculated by Equation (5). The white balance adjustment is performed by applying Equation (6) to all pixels of the input image.

$$R' = R \times R_{gain}$$

$$G' = G \times G_{gain}$$

$$B' = B \times B_{gain} \qquad \dots \dots \dots (6)$$

R', G' and B' are pixel values that underwent white balance adjustment.

The color matching executer 150 applies a color matching matrix to the image that underwent white balance adjustment.

FIG. 7 is a graph illustrating R, G and B gains of each light source, according to an embodiment of the present invention. The R gain and B gain have different values according to light sources, while the G gain shows a similar value regardless of the light source. Hence, the R gain or the B gain can be used to distinguish the light sources.

After the white balance executer 140 performs white balance, the color matching executer 150 applies a matrix for color matching the white balance results.

Referring now to FIG. 8, a diagram illustrates a process of making a color matching matrix applied during white balance adjustment, according to an embodiment of the present invention.

To calculate a color matching matrix, the white balance adjustment apparatus performs white balance adjustment in step 810 after photographing a Macbeth color checker 800 at five light sources of Horizon, A, U30, Cool white, and D65. R, G and B values of each patch are acquired in step 820.

The white balance adjustment apparatus measures a Lab of 24 patches in step 840. The "Lab" represents a value of a Lab color space, which is a standard of a color space and is represented in color coordinates or stereographic coordinates of L*, a*, b*. L* indicates lightness, a* represents a level of Red and Green, and b* represents a level of Yellow and Blue.

The white balance adjustment apparatus expresses the measured Lab in the RGB form in step 830, and converts R, G and B into R', G', and B' in step 850. A matrix that undergoes linear transformation from R, G and B of each patch acquired after execution of white balance to R', G', and B' converted from the Lab, becomes a color matching matrix in step 860. Because every light source has a different color, the white balance adjustment apparatus independently calculates a color matching matrix for each light source, and may perform regression analysis to calculate the color matching matrix.

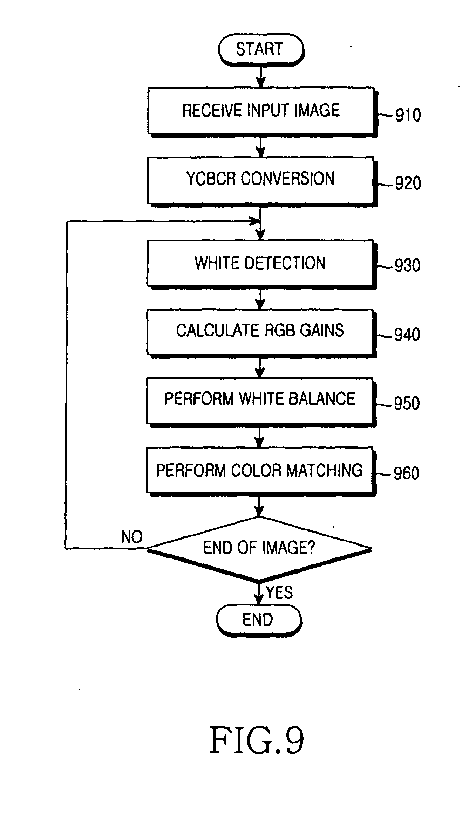

Referring to FIG. 9, a flowchart illustrates a white balance adjustment method, according to an embodiment of the present invention. An input image is received in step 910, and the input image is converted into a YCbCr color space using R, G and B values of the input image in step 920. In step 930, white pixels of the input image are detected. The white pixel detection includes modeling a linear function graph showing a Y-|Cb|+|Cr| relation of each light source for 6 gray patches at the bottom of 24 patches of the Macbeth color checker. Two linear function graphs are calculated, the slopes of which are different by a preset value from a slope of the linear function graph modeled for each light source. Pixels of the input image are determined to be white pixels if the pixels are included in a region between the two calculated graphs. The pixels of the input image are included in the region between two graphs newly calculated for all light sources. If a luminance of the pixels of the input image is greater than an average luminance of the entire input image by a particular multiple or more, they are determined to be white pixels. However, gray pixels of the input image, having a Cb and Cr of which are close to 0, are excluded during white pixel detection.

In step 940, R, G and B gains are calculated from the R, G and B averages of the white pixels detected in step 930. In step 950, white balance adjustment is performed using the R, G and B gains calculated in step 940. In step 960, light sources are distinguished using the R gain and/or B gain of the image, and color matching is performed by applying a color matching matrix corresponding to the light source. The color matching matrix for each light source is calculated in accordance with the process described in FIG. 8.

As is apparent from the foregoing description, the embodiments of the present invention perform white balance adjustment in accordance with the process described above, thereby minimizing color distortion caused by the light sources and thus improving image quality.

Also, the embodiments of the present invention can improve performance of white balance adjustment by detecting white regions of an image, thereby making it possible to minimize color distortion caused by light sources and improve the image quality.

**Claims**

1. A method for adjusting white balance of a digital image, comprising the steps of:

   converting an input image into a YCbCr color space;
   detecting white pixels by comparing chrominance and luminance of the converted input image with chrominance and luminance of image obtained by photographing predetermined gray patches;
   calculating a gain of each R, G and B channel from averages of R, G and B values of the detected white pixels; and
   performing white balance adjustment by applying the calculated gain of each R, G and B channel to each pixel of the input image; and
   wherein detecting white pixels comprises:

   converting an image obtained by photographing gray patches of a Macbeth color checker for each light source into the YCbCr color space;
   modeling for each converted image a linear function graph representing a relation between chrominance |Cb|+|Cr| and luminance Y;
   calculating two linear function graphs for each light source, wherein slopes of each of the two linear function graphs differ from a slope of the modeled linear function graph by a preset slope value;
   determining whether pixels of the input image are included in a region between the two linear function graphs calculated for each light source; and
   defining the pixels of the input image that are included in the region between the two linear function graphs calculated for each light source as white pixels.

2. The method of claim 1, further comprising:

   distinguishing a light source for the input image using a gain of a R or B channel from among the gains of each of the R, G and B channels; and
   performing color matching by applying a color matching matrix corresponding to the distinguished light source.

3. The method of claim 1, wherein the input image is converted in accordance with the following equation:

$$Y = 0.2990 \times R + 0.5870 \times G + 0.1140 \times B$$

$$Cb = -0.1687 \times R - 0.3313 \times G + 0.5000 \times B$$

$$Cr = 0.5000 \times R - 0.4187 \times G - 0.0813 \times B$$

where R, G and B represent respective R, G and B pixel values of a particular pixel, Y represents a luminance component, and Cb and Cr represent color difference components.

4. The method of claim 1, further comprising determining the pixels of the input image as white pixels, when a luminance of the pixels of the input image is greater than an average luminance of all pixels of the input image by at least a preset multiple; and
determining that a pixel having absolute values of a Cb value and a Cr value that are less than a preset threshold, among the pixels defined as white pixels, is not a white pixel.

5. The method of claim 1, wherein the channel gain is calculated in accordance with the following equation:

$$R_{gain} = \frac{(\overline{R} + \overline{G} + \overline{B})/3}{\overline{R}}$$

$$G_{gain} = \frac{(\overline{R} + \overline{G} + \overline{B})/3}{\overline{G}}$$

$$B_{gain} = \frac{(\overline{R} + \overline{G} + \overline{B})/3}{\overline{B}}$$

where $\overline{R}$ represents an average of R values of the detected white pixels, $\overline{G}$ represents an average of G values of the detected white pixels, $\overline{B}$ represents an average of B values of the detected white pixels, $R_{gain}$ represents an R gain, $G_{gain}$ represents a G gain, and $B_{gain}$ represents a B gain, and
wherein the white balance adjustment is performed in accordance with the following equation:

$$R' = R \times R_{gain}$$

$$G' = G \times G_{gain}$$

$$B' = B \times B_{gain}$$

where R', G' and B' represent pixel values obtained by performing white balance, $R_{gain}$ represents an R gain, $G_{gain}$ represents a G gain, and $B_{gain}$ represents a B gain.

6. The method of claim 2,
wherein the color matching matrix is calculated by performing white balance after photographing a Macbeth color checker for each light source, acquiring first R, G and B values of each patch of the Macbeth color checker, measuring a Lab of each patch, converting the measured Lab into second R, G and B values, and linearly converting a space between the first R, G and B values and the second R, G and B values.

7. The method of any one of claims 1 and 6, wherein the light sources comprise Horizon, A, U30, Cool white, and D65.

8. An apparatus adapted to adjust white balance of a digital image, comprising:

an image converter adapted to convert an input image into a YCbCr color space;
a white detector adapted to detect white pixels by comparing chrominance and luminance of the converted input image with chrominance and luminance of image obtained by photographing predetermined gray patches;
a gain calculator adapted to calculate a gain of each R, G and B channel from averages of R, G and B values of the detected white pixels; and

a white balance executer adapted to perform white balance adjustment by applying the calculated gain of each R, G and B channel to each pixel of the input image; and

wherein the white detector converts an image obtained by photographing gray patches of a Macbeth color checker for each light source into the YCbCr color space, models for each converted image a linear function graph representing a relation between chrominance |Cb|+|Cr| and luminance Y, calculates two linear function graphs for each light source, wherein slopes of each of the two linear function graphs differ from a slope of the modeled linear function graph by a preset slope value, determines whether pixels of the input image are included in a region between the two linear function graphs calculated for each light source, and defines the pixels of the input image included in the region between the two linear function graphs calculated for each light source as white pixels.

9. The apparatus of claim 8, further comprising a color matching executer adapted to distinguish a light source for the input image using a gain of a R or B channel from among the gains of each of the R, G and B channels, and performing color matching by applying a color matching matrix corresponding to the distinguished light source.

10. The apparatus of claim 8, wherein the image converter converts the input image in accordance with the following equation:

$$Y = 0.2990 \times R + 0.5870 \times G + 0.1140 \times B$$

$$Cb = -0.1687 \times R - 0.3313 \times G + 0.5000 \times B$$

$$Cr = 0.5000 \times R - 0.4187 \times G - 0.0813 \times B$$

where R, G and B represent R, G and B pixel values of a particular pixel, respectively, Y represents a luminance component, and Cb and Cr represent color difference components.

11. The apparatus of claim 8, wherein the white detector determines the pixels of the input image as white pixels, when a luminance of the pixels of the input image is greater than an average luminance of all pixels of the input image by at least a preset multiple,

wherein the white detector determines that a pixel having absolute values of a Cb value and a Cr value that are less than a preset threshold, among the pixels determined as white pixels, is not a white pixel.

12. The apparatus of claim 8, wherein the gain calculator calculates the gain of each channel in accordance with the following equation:

$$R_{gain} = \frac{(\overline{R} + \overline{G} + \overline{B})/3}{\overline{R}}$$

$$G_{gain} = \frac{(\overline{R} + \overline{G} + \overline{B})/3}{\overline{G}}$$

$$B_{gain} = \frac{(\overline{R} + \overline{G} + \overline{B})/3}{\overline{B}}$$

where $\overline{R}$ represents an average of R values of the detected white pixels, $\overline{G}$ represents an average of G values of the detected white pixels, $\overline{B}$ represents an average of B values of the detected white pixels, $R_{gain}$ represents an R gain, $G_{gain}$ represents a G gain, and $B_{gain}$ represents a B gain, and
wherein the white balance executer performs white balance adjustment in accordance with the following equation:

$$R' = R \times R_{gain}$$

$$G' = G \times G_{gain}$$

$$B' = B \times B_{gain}$$

where R', G' and B' represent pixel values obtained by performing white balance, $R_{gain}$ represents an R gain, $G_{gain}$ represents a G gain, and $B_{gain}$ represents a B gain.

13. The apparatus of claim 9,
wherein the color matching matrix is calculated by performing white balance after photographing a Macbeth color checker for each light source, acquiring first R, G and B values of each patch of the Macbeth color checker, measuring a Lab of each patch, converting the measured Lab into second R, G and B values, and linearly converting a space between the first R, G and B values and the second R, G and B values.


**Patentansprüche**

1. Ein Verfahren zum Anpassen eines Weißabgleichs eines digitalen Bildes, das die Schritte umfasst:

Konvertieren eines Eingangsbildes in einen YCbCr-Farbraum;
Detektieren weißer Pixel durch Vergleichen der Chrominanz und Luminanz des konvertierten Eingangsbildes mit der Chrominanz und Luminanz, eines Bildes, das durch Fotografieren vorbestimmter Graumuster erhalten wird;
Berechnen eines Wertes für jeden der R-, G- und B-Kanäle aus Mittelwerten der R-,G- und B-Werte der detektierten weißen Pixel; und
Ausführen einer Weißabgleichsanpassung durch Verwenden der berechneten Werte für jeden der R-, G- und B-Kanäle für jedes Pixel des Eingangsbildes; und
wobei das Detektieren weißer Pixel umfasst:

Konvertieren eines Bildes, das durch Fotografieren von Graumustern eines Macbeth-Farbgitters für jede Lichtquelle erhalten wird, in den YCbCr-Farbraum;
Modellieren eines linearen Funktionsgraphen, der eine Beziehung zwischen der Chrominanz |Cb| + |Cr| und Luminanz Y darstellt, für jedes konvertierte Bild;
Berechnen zweier linearer Funktionsgraphen für jede Lichtquelle, wobei sich Steigungen jeder der zwei linearen Funktionsgraphen von einer
Steigung des modellierten linearen Funktionsgraphens um einen voreingestellten Steigungswert unterscheiden;
Bestimmen, ob Pixel des Eingangsbildes in einem Bereich zwischen den zwei linearen Funktionsgraphen, die für jede Lichtquelle berechnet werden, enthalten sind; und
Definieren der Pixel des Eingangsbildes, die in dem Bereich zwischen den zwei linearen Funktionsgraphen, die für jede Lichtquelle berechnet werden, enthalten sind, als weiße Pixel.

2. Das Verfahren von Anspruch 1, das weiterhin umfasst:

Identifizieren einer Lichtquelle für das Eingangsbild unter Verwendung der Werte eines R- oder B-Kanals der Werte für jeden der R-, G- und B-Kanäle; und

Ausführen einer Farbanpassung durch Anwenden einer Farbanpassungsmatrix entsprechend der identifizierten Lichtquelle.

3. Das Verfahren von Anspruch 1, in dem das Eingangsbild in Übereinstimmung mit der folgenden Gleichung konvertiert wird:

$$Y = 0.2990 \times R + 0.5870 \times G + 0.1140 \times B$$

$$Cb = -0.1687 \times R - 0.3313 \times G + 0.5000 \times B$$

$$Cr = 0.5000 \times R - 0.4187 \times G - 0.0813 \times B$$

wobei R, G und B R-, G- bzw. B-Pixelwerte eines bestimmten Pixels bezeichnen, Y eine Luminanzkomponente bezeichnet und Cb und Cr Farbdifferenzkomponenten bezeichnen.

4. Das Verfahren von Anspruch 1, das weiterhin das Bestimmen der Pixel des Eingangsbildes als weiße Pixel, wenn eine Luminanz der Pixel des Eingangsbildes um zumindest ein voreingestelltes Vielfaches größer als eine durchschnittliche Luminanz sämtlicher Pixel des Eingangsbildes ist; und
Bestimmen, dass ein Pixel von den Pixel, die als weiße Pixel definiert sind, das Absolutwerte eines Cb-Werts und eines Cr-Werts aufweist, die kleiner als ein voreingestellter Schwellwert sind, kein weißes Pixel ist, umfasst.

5. Das Verfahren von Anspruch 1, in dem der Kanalwert in Übereinstimmung mit der folgenden Gleichung berechnet wird:

$$R_{gain} = \frac{(\overline{R} + \overline{G} + \overline{B}) / 3}{\overline{R}}$$

$$G_{gain} = \frac{(\overline{R} + \overline{G} + \overline{B}) / 3}{\overline{G}}$$

$$B_{gain} = \frac{(\overline{R} + \overline{G} + \overline{B}) / 3}{\overline{B}}$$

wobei $\overline{R}$ einen Durchschnitt von R-Werten der detektierten weißen Pixel bezeichnet, $\overline{G}$ einen Durchschnitt von G-Werten der detektierten weißen Pixel bezeichnet, $\overline{B}$ einen Durchschnitt von B-Werten der detektierten weißen Pixel bezeichnet, $R_{gain}$ einen R-Wert bezeichnet, $G_{gain}$ einen G-Wert bezeichnet und $B_{gain}$ einen B-Wert bezeichnet, und wobei die Weißabgleichsanpassung in Übereinstimmung mit der folgenden Gleichung ausgeführt wird:

$$R' = R \times R_{gain}$$

$$G' = G \times G_{gain}$$

$$B' = B \times B_{gain}$$

wobei R', G' und B' Pixelwerte bezeichnen, die durch Ausführen eines Weißabgleichs erhalten werden, $R_{gain}$ einen R-Wert bezeichnet, $G_{gain}$ einen G-Wert bezeichnet und $B_{gain}$ einen B-Wert bezeichnet.

6. Das Verfahren von Anspruch 2, in dem die Farbanpassungsmatrix durch Ausführen eines Weißabgleichs nach Fotografieren eines Macbeth-Farbgitters für jede Lichtquelle, Erheben erster R-, G- und B-Werte jedes Musters des Macbeth-Farbgitters, Messen eines Lab eines jeden Musters, Konvertieren des gemessenen Lab in zweite R-, G- und B-Werte und lineares Konvertieren eines Raums zwischen den ersten R-, G- und B-Werten und den zweiten erster R-, G- und B-Werten berechnet wird.

7. Das Verfahren eines der Ansprüche 1 bis 6, in dem die Lichtquellen Horizon, A, U30, Cool White und D65 umfassen.

8. Eine Vorrichtung, die dazu ausgebildet ist, einen Weißabgleich eines digitalen Bildes anzupassen, die umfasst:

einen Bildkonverter, der dazu ausgebildet ist, ein Eingangsbild in einen YCbCr-Farbraum zu konvertieren;
einen Weißdetektor, der dazu ausgebildet ist, weiße Pixel durch Vergleichen der Chrominanz und Luminanz des konvertierten Eingangsbildes mit der Chrominanz und Luminanz eines Bildes, das durch Fotografieren vorbestimmter Graumuster erhalten wird, zu detektieren;
einen Werteberechner, der dazu ausgebildet ist, einen Wert für jeden der R-, G- und B-Kanäle aus Mittelwerten der R-,G- und B-Werte der detektierten weißen Pixel zu berechnen; und
eine Weißabgleichsausführungseinrichtung, die dazu ausgebildet ist, eine Weißabgleichsanpassung durch Verwenden der berechneten Werte für jeden der R-, G- und B-Kanäle für jedes Pixel des Eingangsbildes auszuführen; und
wobei der Weißabgleichsdetektor ein Bild, das durch Fotografieren von Graumustern eines Macbeth-Farbgitters für jede Lichtquelle erhalten wird, in den YCbCr-Farbraum konvertiert, für jedes konvertierte Bild einen linearen Funktionsgraphen, der eine Beziehung zwischen der Chrominanz $|Cb| + |Cr|$ und Luminanz Y darstellt, modelliert, zwei lineare Funktionsgraphen für jede Lichtquelle berechnet, wobei sich Steigungen jeder der zwei linearen Funktionsgraphen von einer Steigung des modellierten linearen Funktionsgraphens um einen voreingestellten Steigungswert unterscheiden, bestimmt, ob Pixel des Eingangsbildes in einem Bereich zwischen den zwei linearen Funktionsgraphen, die für jede Lichtquelle berechnet werden, enthalten sind, und die Pixel des Eingangsbildes, die in dem Bereich zwischen den zwei linearen Funktionsgraphen, die für jede Lichtquelle berechnet werden, enthalten sind, als weiße Pixel definiert.

9. Die Vorrichtung von Anpruch 8, die weiterhin eine Farbanpassungsausführeinrichtung umfasst, die dazu ausgebildet ist, eine Lichtquelle für das Eingangsbild unter Verwendung der Werte eines R- oder B-Kanals der Werte für jeden der R-, G- und B-Kanäle zu identifizieren, und die eine Farbanpassung durch Anwenden einer Farbanpassungsmatrix entsprechend der identifizierten Lichtquelle ausführt.

10. Die Vorrichtung von Anspruch 8, in der der Bildkonverter das Eingangsbild in Übereinstimmung mit der folgenden Gleichung konvertiert:

$$Y = 0.2990 \times R + 0.5870 \times G + 0.1140 \times B$$

$$Cb = -0.1687 \times R - 0.3313 \times G + 0.5000 \times B$$

$$Cr = 0.5000 \times R - 0.4187 \times G - 0.0813 \times B$$

wobei R, G und B R-, G- bzw. B-Pixelwerte eines bestimmten Pixels bezeichnen, Y eine Luminanzkomponente bezeichnet und Cb und Cr Farbdifferenzkomponenten bezeichnen.

11. Die Vorrichtung von Anspruch 8, in der der Weißdetektor die Pixel des Eingangsbildes als weiße Pixel bestimmt, wenn eine Luminanz der Pixel des Eingangsbildes um zumindest ein voreingestelltes Vielfaches größer als eine durchschnittliche Luminanz sämtlicher Pixel des Eingangsbildes ist,
wobei der Weißdetektor bestimmt, dass ein Pixel von den Pixel, die als weiße Pixel definiert sind, das Absolutwerte eines Cb-Werts und eines Cr-Werts aufweist, die kleiner als ein voreingestellter Schwellwert sind, kein weißes Pixel ist.

**12.** Die Vorrichtung von Anspruch 8, in der der Werteberechner die Werte jedes Kanals gemäß der folgenden Gleichung berechnet:

$$R_{gain} = \frac{(\overline{R} + \overline{G} + \overline{B})/3}{\overline{R}}$$

$$G_{gain} = \frac{(\overline{R} + \overline{G} + \overline{B})/3}{\overline{G}}$$

$$B_{gain} = \frac{(\overline{R} + \overline{G} + \overline{B})/3}{\overline{B}}$$

wobei $\overline{R}$ einen Durchschnitt von R-Werten der detektierten weißen Pixel bezeichnet, $\overline{G}$ einen Durchschnitt von G-Werten der detektierten weißen Pixel bezeichnet, $\overline{B}$ einen Durchschnitt von B-Werten der detektierten weißen Pixel bezeichnet, $Rg_{ain}$ einen R-Wert bezeichnet, $Gg_{ain}$ einen G-Wert bezeichnet und $B_{gain}$ einen B-Wert bezeichnet, und wobei die Weißabgleichsausführungseinrichtung die Weißabgleichsanpassung in Übereinstimmung mit der folgenden Gleichung ausführt:

$$R' = R \times R_{gain}$$

$$G' = G \times G_{gain}$$

$$B' = B \times B_{gain}$$

wobei R', G' und B' Pixelwerte bezeichnen, die durch Ausführen eines Weißabgleichs erhalten werden, $R_{gain}$ einen R-Wert bezeichnet, $G_{gain}$ einen G-Wert bezeichnet und $B_{gain}$ einen B-Wert bezeichnet.

**13.** Die Vorrichtung von Anspruch 9, in der die Farbanpassungsmatrix durch Ausführen eines Weißabgleichs nach Fotografieren eines Macbeth-Farbgitters für jede Lichtquelle, Erheben erster R-, G- und B-Werte jedes Musters des Macbeth-Farbgitters, Messen eines Lab eines jeden Musters, Konvertieren des gemessenen Lab in zweite R-, G- und B-Werte und lineares Konvertieren eines Raums zwischen den ersten R-, G- und B-Werten und den zweiten erster R-, G- und B-Werten berechnet wird.

**Revendications**

**1.** Procédé pour ajuster la balance des blancs d'une image numérique, comprenant les étapes consistant à : convertir une image d'entrée en un espace colorimétrique YcbCr ;
détecter des pixels blancs en comparant la chrominance et la luminance de l'image d'entrée convertie avec la chrominance et la luminance d'une image obtenue en photographiant des zones grises prédéterminées ;
calculer un gain pour chaque canal R, V et B (R, G et B) à partir de moyennes de valeurs R, V et B des pixels blancs détectés ; et
mettre en oeuvre un ajustement de balance des blancs en appliquant le gain calculé de chaque canal R, V et B à chaque pixel de l'image d'entrée ; et

dans lequel la détection de pixels blancs comprend :

la conversion d'une image obtenue en photographiant des zones grises d'une charte de couleur Macbeth pour chaque source lumineuse dans l'espace colorimétrique YcbCr ;

la modélisation, pour chaque image convertie, d'un graphe de fonction linéaire représentant une relation entre chrominance |Cb|+|Cr| et luminance Y ;

le calcul de deux graphes de fonction linéaire pour chaque source lumineuse, dans lequel les pentes de chacun des deux graphes de fonction linéaire diffèrent de la pente du graphe de fonction linéaire modélisé d'une valeur de pente préétablie ;

la détermination du fait que des pixels de l'image d'entrée sont inclus ou non dans une région comprise entre les deux graphes de fonction linéaire calculés pour chaque source lumineuse ; et

la définition des pixels de l'image d'entrée inclus dans la région comprise entre les deux graphes de fonction linéaire calculés pour chaque source lumineuse comme étant des pixels blancs.

2. Procédé selon la revendication 1, comprenant en outre :

la distinction d'une source lumineuse pour l'image d'entrée en utilisant le gain d'un canal R ou B parmi les gains de chacun des canaux R, V et B ; et

la mise en oeuvre d'une mise en correspondance des couleurs en appliquant une matrice de mise en correspondance des couleurs correspondant à la source lumineuse distinguée.

3. Procédé selon la revendication 1, dans lequel l'image d'entrée est convertie selon l'équation suivants :

$$Y = 0,2990 \times R + 0,5870 \times V + 0,1140 \times B$$

$$Cb = -0,1687 \times R - 0,3313 \times V + 0,5000 \times B$$

$$Cr = 0,5000 \times R - 0,4187 \times V - 0,0813 \times B$$

où *R, V* et B représentent des valeurs de pixel R, V et B respectives d'un pixel particulier, *Y* représente une composante de luminance, et *Cb* et *Cr* représentent des composantes de différence de couleur.

4. Procédé selon la revendication 1, comprenant en outre la détermination des pixels de l'image d'entrée comme étant des pixels blancs lorsque la luminance des pixels de l'image d'entrée est supérieure d'au moins un multiple préétabli à une luminance moyenne de tous les pixels de l'image d'entrée ; et

la détermination du fait qu'un pixel ayant des valeurs absolues d'une valeur Cb et d'une valeur Cr inférieures à un seuil préétabli, parmi les pixels définis comme étant des pixels blancs, n'est pas un pixel blanc.

5. Procédé selon la revendication 1, dans lequel le gain de canal est calculé selon l'équation suivants :

$$R_{gain} = \frac{(\overline{R} + \overline{V} + \overline{B})/3}{\overline{R}}$$

$$V_{gain} = \frac{(\overline{R} + \overline{V} + \overline{B})/3}{\overline{V}}$$

EP 2 227 025 B1

$$B_{gain} = \frac{(\overline{R} + \overline{V} + \overline{B})/3}{\overline{B}}$$

où $\overline{R}$ représente la moyenne de valeurs R des pixels blancs détectés, $\overline{V}$ représente la moyenne de valeurs V des pixels blancs détectés, $\overline{B}$ représente la moyenne de valeurs B des pixels blancs détectés, $R_{gain}$ représente un gain R, $V_{gain}$ représente un gain V, et $B_{gain}$ représente un gain B, et

dans lequel l'ajustement de la balance des blancs est effectué selon l'équation suivante :

$$R' = R \times R_{gain}$$

$$V' = V \times V_{gain}$$

$$B' = B \times B_{gain}$$

où $R'$, $V'$ et $B'$ représentent des valeurs de pixel obtenues en mettant en oeuvre une balance des blancs, $R_{gain}$ représente un gain R, $V_{gain}$ représente un gain V, et $B_{gain}$ représente un gain B.

6.  Procédé selon la revendication 2,
    dans lequel la matrice de mise en correspondance des couleurs est calculée en mettant en oeuvre une balance des blancs après avoir photographié une charte de couleur Macbeth pour chaque source lumineuse, en effectuant l'acquisition de premières valeurs R, V et B pour chaque zone de la charte de couleur Macbeth, en mesurant un Lab de chaque zone, en convertissant le Lab mesuré en deuxièmes valeurs R, V et B, et en convertissant linéairement un espace compris entre les premières valeurs R, V et B et les deuxièmes valeurs R, V et B.

7.  Procédé selon l'une quelconque des revendications 1 et 6, dans lequel les sources lumineuses comprennent les sources Horizon, A, U30, Cool blanc et D65.

8.  Appareil adapté pour ajuster la balance des blancs d'une image numérique, comprenant :

    un convertisseur d'images adapté pour convertir une image entrée en un espace colorimétrique YcbCr ;
    un détecteur de blanc adapté pour détecter des pixels blancs en comparant la chrominance et la luminance de l'image d'entrée convertie avec la chrominance et la luminance d'une image obtenue en photographiant des zones grises prédéterminées ;
    un calculateur de gain adapté pour calculer un gain de chaque canal R, V et B (R, G et B) à partir de moyennes de valeurs R, V et B des pixels blancs détectés ; et
    un exécuteur de balance des blancs adapté pour mettre en oeuvre un ajustement de balance des blancs en appliquant le gain calculé de chaque canal R, V et B à chaque pixel de l'image d'entrée ; et
    dans lequel le détecteur de blanc convertit une image obtenue en photographiant des zones grises d'un charte de couleur Macbeth pour chaque source lumineuse dans l'espace colorimétrique YcbCr, modélise, pour chaque image convertie, un graphe de fonction linéaire représentant une relation entre chrominance |Cb|+|Cr| et luminance Y, calcule deux graphes de fonction linéaire pour chaque source lumineuse, dans lequel les pentes de chacun des deux graphes de fonction linéaire diffèrent de la pente du graphe de fonction linéaire modélisé d'une valeur de pente préétablie, détermine le fait que des pixels de l'image d'entrée sont inclus ou non dans une région comprise entre les deux graphes de fonction linéaire calculés pour chaque source lumineuse, et définit les pixels de l'image d'entrée inclus dans la région comprise entre les deux graphes de fonction linéaire calculés pour chaque source lumineuse comme étant des pixels blancs.

9.  Appareil selon la revendication 8, comprenant en outre un exécuteur de mise en correspondance de couleurs adapté pour distinguer une source lumineuse pour l'image d'entrée en utilisant un gain d'un canal R ou B parmi les gains de chacun des canaux R, V et B, et en mettant en oeuvre une mise en correspondance des couleurs en appliquant une matrice de mise en correspondance des couleurs correspondant à la source lumineuse distinguée.

10. Appareil selon la revendication 8, dans lequel le convertisseur d'image convertit l'image d'entrée selon l'équation suivante :

$$Y = 0,2990 \times R + 0,5870 \times V + 0,1140 \times B$$

$$Cb = -0,1687 \times R - 0,3313 \times V + 0,5000 \times B$$

$$Cr = 0,5000 \times R - 0,4187 \times V - 0,0813 \times B$$

où R, V et B représentent des valeurs de pixel R, V et B respectives d'un pixel particulier, Y représente une composante de luminance, et Cb et Cr représentent des composantes de différence de couleur.

11. Appareil selon la revendication 8, dans lequel le détecteur de blanc détermine les pixels de l'image d'entrée comme étant des pixels blancs lorsque la luminance des pixels de l'image d'entrée est supérieure d'au moins un multiple préétabli à une luminance moyenne de tous les pixels de l'image d'entrée,
dans lequel le détecteur de blanc détermine qu'un pixel ayant des valeurs absolues d'une valeur Cb et d'une valeur Cr inférieures à un seuil préétabli, parmi les pixels déterminés comme étant des pixels blancs, n'est pas un pixel blanc.

12. Appareil selon la revendication 8, dans lequel le calculateur de gain calcule le gain de chaque canal selon l'équation suivante :

$$R_{gain} = \frac{(\overline{R} + \overline{V} + \overline{B})/3}{\overline{R}}$$

$$V_{gain} = \frac{(\overline{R} + \overline{V} + \overline{B})/3}{\overline{V}}$$

$$B_{gain} = \frac{(\overline{R} + \overline{V} + \overline{B})/3}{\overline{B}}$$

où $\overline{R}$ représente la moyenne de valeurs R des pixels blancs détectés, $\overline{V}$ représente la moyenne de valeurs V des pixels blancs détectés, $\overline{B}$ représente la moyenne de valeurs B des pixels blancs détectés, $R_{gain}$ représente un gain R, $V_{gain}$ représente un gain V, et $B_{gain}$ représente un gain B, et
dans lequel l'exécuteur de balance des blancs met en oeuvre un ajustement de la balance des blancs selon l'équation suivante :

$$R' = R \times R_{gain}$$

$$V' = V \times V_{gain}$$

$$B' = B \times B_{gain}$$

où $R'$, $V'$ et $B'$ représentent des valeurs de pixel obtenues en mettant en oeuvre une balance des blancs, $R_{gain}$ représente un gain R, $V_{gain}$ représente un gain V, et $B_{gain}$ représente un gain B.

13. Appareil selon la revendication 9,
dans lequel la matrice de mise en correspondance des couleurs est calculée en mettant en oeuvre une balance des blancs après avoir photographié une charte de couleur Macbeth pour chaque source lumineuse, en effectuant l'acquisition de premières valeurs R, V et B pour chaque zone de la charte de couleur Macbeth, en mesurant un Lab de chaque zone, en convertissant le Lab mesuré en deuxièmes valeurs R, V et B, et en convertissant linéairement un espace entre les premières valeurs R, V et B et les deuxièmes valeurs R, V et B.

110 120 130 140 150

INPUT
IMAGE → IMAGE
CONVERTER → WHITE
DETECTOR → GAIN
CALCULATOR → WHITE
BALANCE
EXECUTER → COLOR
MATCHING
EXECUTER → OUTPUT
IMAGE

FIG.1

FIG.2

FIG.3

FIG.4

FIG.5

| LIGHT SOURCE | BEFORE WHITE DETECTION | AFTER WHITE DETECTION |
|---|---|---|
| Horizon | | |
| A | | |
| U30 | | |
| Coolwhite | | |
| D65 | | |

FIG.6

RGB GAIN OF EACH LIGHT SOURCE

FIG.7

FIG.8

START

RECEIVE INPUT IMAGE — 910

YCBCR CONVERSION — 920

WHITE DETECTION — 930

CALCULATE RGB GAINS — 940

PERFORM WHITE BALANCE — 950

PERFORM COLOR MATCHING — 960

NO ← END OF IMAGE?

YES

END

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007133071 A1
- EP 1585345 A2
- US 2010013952 A1
- US 2010020192 A1